(19) Europäisches Patentamt
European Patent Office
Office européen des brevets

(11) **EP 2 277 719 B1**

(12) **EUROPEAN PATENT SPECIFICATION**

(45) Date of publication and mention
of the grant of the patent:
**27.08.2014 Bulletin 2014/35**

(51) Int Cl.:
***B60C 13/02*** *(2006.01)*    ***B60C 13/00*** *(2006.01)*

(21) Application number: **09746389.7**

(86) International application number:
**PCT/JP2009/002140**

(22) Date of filing: **15.05.2009**

(87) International publication number:
**WO 2009/139182 (19.11.2009 Gazette 2009/47)**

(54) **PNEUMATIC TIRE**

LUFTREIFEN

PNEUMATIQUE

(84) Designated Contracting States:
**AT BE BG CH CY CZ DE DK EE ES FI FR GB GR
HR HU IE IS IT LI LT LU LV MC MK MT NL NO PL
PT RO SE SI SK TR**

(30) Priority: **16.05.2008 JP 2008129422
13.05.2009 JP 2009116061**

(43) Date of publication of application:
**26.01.2011 Bulletin 2011/04**

(73) Proprietor: **Sumitomo Rubber Industries, Ltd.
Kobe-shi, Hyogo 651-0072 (JP)**

(72) Inventors:
• **HAYASHI, Satoshi
Hyogo 651-0072 (JP)**

• **IMAMURA, Ao
Hyogo 651-0072 (JP)**

(74) Representative: **Manitz, Finsterwald & Partner
GbR
Martin-Greif-Strasse 1
80336 München (DE)**

(56) References cited:
**JP-A- 4 238 703    JP-A- 4 297 310
JP-A- 10 058 925    JP-A- 2000 016 030
JP-A- 2008 001 249    JP-A- 2008 062 716
JP-A- 2008 273 288**

Description

## TECHNICAL FIELD

The present invention relates to a pneumatic tire. In detail, the present invention relates to an improvement in a side surface of a pneumatic tire. The features of the preamble of claim 1 are known from JP 2008-062716 A, JP 04-238703 A, JP 2000 016030A and JP 2008 001249 A disclose related pneumatic tires.

## BACKGROUND ART

A profile of a tire (a shape of a surface from a tread to a sidewall on the assumption that concavo-convex portions are not present) influences a basic performance of the tire, for example, a handling stability, a ride comfort or the like. It is necessary to determine an appropriate profile depending on a concept of the tire. Japanese Laid-Open Patent Publication No. 8-337101 discloses a method of determining a profile using a function. The profile determined by the method has a curvature radius which is gradually decreased from an equator plane toward an outside in an axial direction. The profile is referred to as a CTT profile. By employing the CTT profile, it is possible to enhance various performances of the tire.

In recent years, a run flat tire including a support layer on an inside of a sidewall has been developed and spread. A crosslinked rubber having a high hardness is used for the support layer. The type of this run flat tire is referred to as a "side reinforcing type". In the run flat tire of this type, when an internal pressure is reduced due to a puncture, a load is supported by the support layer. The support layer suppresses a flexure of the tire in the puncture state. Even if a running operation is continuously carried out in the puncture state, the crosslinked rubber having the high hardness suppresses a generation of heat in the support layer. In the run flat tire, it is also possible to carry out the running operation at some distance in the puncture state. It is not necessary to always provide a spare tire for a car to which the run flat tire is attached. By employing the run flat tire, it is possible to prevent a tire from being exchanged in an inconvenient place.

When the running operation of the run flat tire brought into the puncture state is continuously carried out, the support layer is repetitively deformed and restored. By the repetition, heat is generated in the support layer and a temperature of the tire is raised highly. The heat causes a breakage of a rubber member constituting the tire and peeling between the rubber members. In the tire causing the breakage or the peeling, the running operation cannot be carried out. There has been desired a run flat tire which can carry out the running operation for a long time in the puncture state, that is, a run flat tire over which a breakage and peeling are caused by heat with difficulty.

Japanese Laid-Open Patent Publication No. 2007-50854 discloses a run flat tire including a groove on a surface of a sidewall. The sidewall including the groove has a large surface area. Accordingly, a contact area of the tire with an atmosphere is large. By the large contact area, a heat radiation from the tire to the atmosphere is promoted. A temperature of the tire is raised with difficulty.

International Laid-Open Patent Publication No. WO2007/32405 discloses a run flat tire including a convex part on a sidewall portion. The convex part generates a turbulent flow around the tire. By the turbulent flow, a heat radiation from the tire to an atmosphere is promoted. A temperature of the tire is raised with difficulty.

Patent Document 1 : Japanese Laid-Open Patent Publication No. 8-337101
Patent Document 2 : Japanese Laid-Open Patent Publication No. 2007-50854
Patent Document 3 : International Laid-Open Patent Publication No. WO2007/32405

## DISCLOSURE OF THE INVENTION

## PROBLEMS TO BE SOLVED

In the run flat tire disclosed in the Japanese Laid-Open Patent Publication No. 2007-50854, the heat radiation is promoted by the large surface area. However, the effect is limited. In the run flat tire disclosed in the International Laid-Open Patent Publication No. WO2007/32405, air stays at a downstream of the convex part. Therefore, the heat radiation in the downstream of the convex part is insufficient. The insufficient heat radiation deteriorates a durability of the tire. It is possible to improve a durability of the conventional run flat tire in a puncture state. It is also possible to improve the durability of the tire set into a normal state.

It is an object of the present invention to provide a pneumatic tire which is excellent in a durability.

## MEANS FOR SOLVING THE PROBLEMS

A pneumatic tire according to the present invention includes:

(1) a tread including a profile having a plurality of circular arcs in different curvature radii from each other;

(2) a pair of sidewalls extended almost inward in a radial direction from an end of the tread, respectively;

(3) a pair of beads positioned on an almost inside in the radial direction with respect to the sidewalls, respectively;

(4) a carcass laid between both of the beads along the tread and the sidewalls; and

(5) a reinforcing layer positioned on an inside of the tread and a outside of the carcass in the radial direction. The tire has a large number of dimples on a side surface thereof.

The dimple should take a shape of a truncated cone.

It is preferable that the dimple should have a diameter which is equal to or greater than 6 mm and is equal to or smaller than 18 mm. It is preferable that the dimple should have a depth which is equal to or greater than 0.5 mm and is equal to or smaller than 3.0 mm.

The effect of the dimple is remarkable in a tire having a support layer positioned on an inside in an axial direction with respect to the sidewall (that is, a run flat tire of a side reinforcing type).

The effect of the dimple is remarkable in a tire having a so-called CTT profile. In the tire, a profile from a center point TC of a surface of the tread to a point $P_{90}$ on which a distance in the axial direction from the center point TC is 90% of a half of a width of the tire is formed by a plurality of circular arcs. Each of the circular arcs is provided in contact with the circular arc which is adjacent thereto. A curvature radius of each of the circular arcs is smaller than a curvature radius of the circular arc on an inside in the axial direction therefrom. The profile satisfies the following equations (1) to (4):

$$0.05 < Y_{60}/H \leqq 0.10 \qquad (1)$$

$$0.10 < Y_{75}/H \leqq 0.2 \qquad (2)$$

$$0.2 < Y_{90}/H \leqq 0.4 \qquad (3)$$

$$0.4 < Y_{100}/H \leqq 0.7 \qquad (4).$$

In the equations (1) to (4), H represents a height of the tire, $Y_{60}$, $Y_{75}$, $Y_{90}$ and $Y_{100}$ represent distances in the radial direction between the center point TC and the points $P_{60}$, $P_{75}$, $P_{90}$ and $P_{100}$, respectively. The points $P_{60}$, $P_{75}$, $P_{90}$ and $P_{100}$ indicate points on the profile in which the distances in the axial direction from the center point TC are 60%, 75%, 90% and 100% of the half of the width of the tire, respectively.

## EFFECT OF THE INVENTION

In the tire according to the present invention, a large surface area of the side surface can be achieved by the dimple. The large surface area promotes a heat radiation from the tire to an atmosphere. The dimple further generates a turbulent flow around the tire. By the turbulent flow, the heat radiation from the tire to the atmosphere is promoted. In the tire, a residence of air is caused with difficulty. A temperature of the tire is raised with difficulty. In the tire, it is hard to cause a breakage of a rubber member and peeling between the rubber members due to heat. The tire is excellent in a durability.

## BRIEF DESCRIPTION OF THE DRAWINGS

Fig. 1 is a sectional view showing a part of a pneumatic tire according to an embodiment of the present invention.

Fig. 2 is an enlarged perspective view showing a part of a sidewall of the tire in Fig. 1.

Fig. 3 is an enlarged plan view showing a dimple of the tire in Fig. 1.

Fig. 4 is a sectional view taken along a IV - IV line in Fig. 3.

Fig. 5 is a sectional view showing a part of the tire in Fig. 1.

Fig. 6 is a sectional view showing a part of a tire according to another embodiment of the present invention.

Fig. 7 is a sectional view showing a part of a tire according to a further embodiment of the present invention.

Fig. 8 is a graph showing a result of an analysis.

Fig. 9 is a graph showing a result of an experiment.

**EXPLANATION OF DESIGNATION**

| | |
|---|---|
| 2 | tire |
| 4 | tread |
| 8 | sidewall |
| 10 | clinch portion |
| 12 | bead |
| 14 | carcass |
| 16 | support layer |
| 18 | belt |
| 20 | band |
| 62, 72, 74 | dimple |
| 64 | land |
| 66 | slope surface |
| 68 | bottom surface |
| 76 | first curved surface |
| 78 | second curved surface |

**BEST MODE FOR CARRYING OUT THE INVENTION**

The present invention will be described below in detail based on preferred embodiments with reference to the drawings.

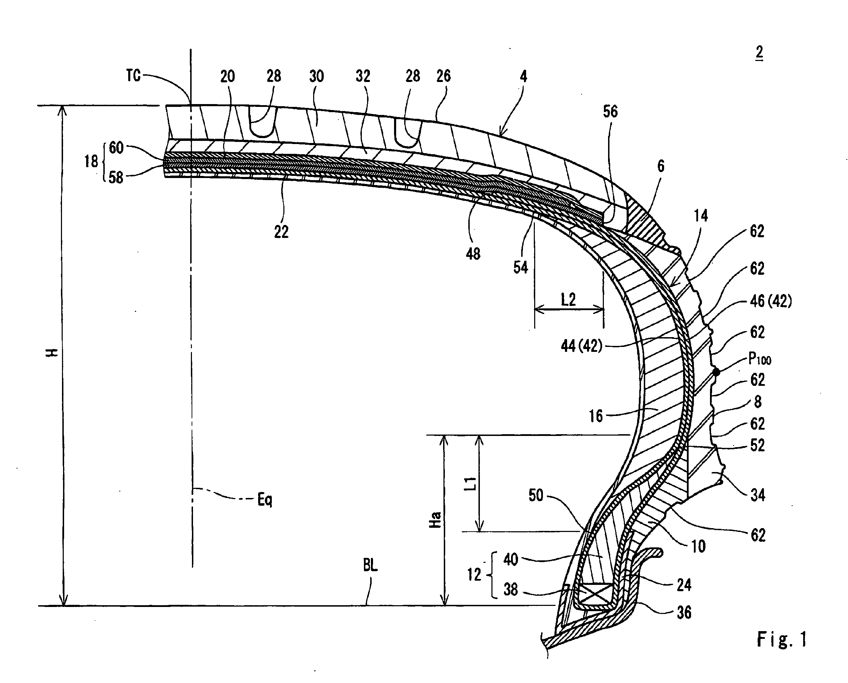

In Fig. 1, a vertical direction indicates a radial direction, a transverse direction indicates an axial direction, and a perpendicular direction to a paper indicates a circumferential direction. A pneumatic tire 2 (a run flat tire) shown in Fig. 1 takes an almost symmetrical shape around a one-dotted chain line Eq in Fig. 1. The one-dotted chain line Eq represents an equator plane of the tire 2. In Fig. 1, a double arrow H indicates a height of the tire 2 from a base line BL (which will be described later in detail).

The tire 2 includes a tread 4, a wing 6, a sidewall 8, a clinch portion 10, a bead 12, a carcass 14, a support layer 16, a belt 18, a band 20, an inner liner 22 and a chafer 24. The belt 18 and the band 20 constitute a reinforcing layer. The reinforcing layer may be constituted by only the belt 18. The reinforcing layer may be constituted by only the band 20.

The tread 4 takes an outward convex shape in the radial direction. The tread 4 forms a tread surface 26 to come in contact with a road surface. A groove 28 is formed on the tread surface 26. A tread pattern is formed by the groove 28. The tread 4 has a cap layer 30 and a base layer 32. The cap layer 30 is constituted by a crosslinked rubber. The base layer 32 is constituted by another crosslinked rubber. The cap layer 30 is positioned on an outside in the radial direction with respect to the base layer 32. The cap layer 30 is provided on the base layer 32.

The sidewall 8 is extended almost inward in the radial direction from an end of the tread 4. The sidewall 8 is constituted by a crosslinked rubber. The sidewall 8 prevents an external damage of the carcass 14. The sidewall 8 includes a rib 34. The rib 34 is protruded outward in the axial direction. When a running operation is carried out in a puncture state, the rib 34 abuts on a rim flange 36. By the abutment, a deformation of the bead 12 can be suppressed.

The tire 2 having the deformation suppressed is excellent in a durability in the puncture state.

The clinch portion 10 is positioned on an almost inside in the radial direction with respect to the sidewall 8. The clinch portion 10 is positioned on an outside of the bead 12 and the carcass 14 in the axial direction. The clinch portion 10 abuts on the rim flange 36.

The bead 12 is positioned on an inside in the radial direction with respect to the sidewall 8. The bead 12 includes a core 38 and an apex 40 extended outward in the radial direction from the core 38. The core 38 is ring-shaped and includes a non-extensible wire which is wound (typically, a wire formed of steel). The apex 40 is tapered outward in the radial direction. The apex 40 is constituted by a crosslinked rubber having a high hardness.

In Fig. 1, an arrow Ha indicates a height of the apex 40 from the base line BL. The base line BL passes through an innermost point in the radial direction of the core 38. The base line BL is extended in the axial direction. It is preferable that a ratio (Ha/H) of the height Ha of the apex 40 to the height H of the tire 2 should be equal to or higher than 0.1 and be equal to or lower than 0.7. The apex 40 having the ratio (Ha/H) which is equal to or higher than 0.1 can support a vehicle weight in the puncture state. The apex 40 contributes to the durability of the tire 2 in the puncture state. From this viewpoint, it is more preferable that the ratio (Ha/H) should be equal to or higher than 0.2. The tire 2 having the ratio (Ha/H) which is equal to or lower than 0.7 is excellent in a ride comfort. From this viewpoint, it is more preferable that the ratio (Ha/H) should be equal to or lower than 0.6.

The carcass 14 is formed by a carcass ply 42. The carcass ply 42 is laid between the beads 12 on both sides and is provided along the tread 4 and the sidewall 8. The carcass ply 42 is folded back from an inside toward an outside in the axial direction around the core 38. By the fold-back, a main portion 44 and a fold-back portion 46 are formed in the carcass ply 42. An end 48 of the fold-back portion 46 reaches a part provided under the belt 18. In other words, the fold-back portion 46 overlaps with the belt 18. The carcass 14 has a so-called "ultrahigh turn-up structure". The carcass 14 having the ultrahigh turn-up structure contributes to the durability of the tire 2 in the puncture state. The carcass 14 contributes to the durability in the puncture state.

The carcass ply 42 is formed by a large number of cords provided in parallel and a topping rubber. An absolute value of an angle formed by each of the cords with respect to the equator plane is 45° to 90°, and furthermore, 75° to 90°. In other words, the carcass 14 has a radial structure. The cord is constituted by an organic fiber. Examples of a preferable organic fiber include a polyester fiber, a nylon fiber, a rayon fiber, a polyethylene naphthalate fiber and an aramid fiber.

The support layer 16 is positioned on an inside in the axial direction with respect to the sidewall 8. The support layer 16 is interposed between the carcass 14 and the inner liner 22. The support layer 16 is tapered inward and outward in the radial direction. The support layer 16 takes a similar shape to a crescent. The support layer 16 is constituted by a crosslinked rubber having a high hardness. When the tire 2 gets punctured, the support layer 16 supports a load. By the support layer 16, the tire 2 can run within some distance even if the puncture state is brought. The run flat tire 2 is of a side reinforcing type. The tire 2 may include a support layer which takes a different shape from the shape of the support layer 16 shown in Fig. 1.

A part of the carcass 14 which overlaps with the support layer 16 is provided apart from the inner liner 22. In other words, the carcass 14 is curved due to presence of the support layer 16. In the puncture state, a compressive load is applied to the support layer 16 and a tensile load is applied to a region of the carcass 14 which is close to the support layer 16. Since the support layer 16 is constituted by a rubber lump, it can sufficiently withstand the compressive load. The cord of the carcass 14 can sufficiently withstand the tensile load. By the support layer 16 and the carcass cord, it is possible to suppress a vertical flexure of the tire 2 in the puncture state. The tire 2 having the vertical flexure suppressed is excellent in a handling stability in the puncture state.

In respect of a suppression of a vertical strain in the puncture state, the hardness of the support layer 16 is preferably equal to or higher than 60 and is more preferably equal to or higher than 65. In respect of the ride comfort in a normal state (a state in which a normal internal pressure is applied to the tire 2), the hardness is preferably equal to or lower than 90 and is more preferably equal to or lower than 80. The hardness is measured by a durometer of a type A in accordance with the rules of "JIS K6253". The durometer is pushed against a section shown in Fig. 1 to measure the hardness. The measurement is carried out at a temperature of 23°C.

A lower end 50 of the support layer 16 is positioned on an inside in the radial direction with respect to an upper end 52 of the apex 40. In other words, the support layer 16 overlaps with the apex 40. In Fig.1, an arrow L1 indicates a distance in the radial direction between the lower end 50 of the support layer 16 and the upper end 52 of the apex 40. It is preferable that the distance L1 should be equal to or greater than 5 mm and be equal to or smaller than 50 mm. In the tire 2 having the distance L1 within this range, a uniform rigidity distribution can be obtained. It is more preferable that the distance L1 should be equal to or greater than 10 mm. It is more preferable that the distance L1 should be equal to or smaller than 40 mm.

An upper end 54 of the support layer 16 is positioned on an inside in the axial direction with respect to an end 56 of the belt 18. In other words, the support layer 16 overlaps with the belt 18. In Fig.1, an arrow L2 indicates a distance in the axial direction between the upper end 54 of the support layer 16 and the end 56 of the belt 18. It is preferable that the distance L2 should be equal to or greater than 2 mm and be equal to or smaller than 50 mm. In the tire 2 having the distance L2 within this range, a uniform rigidity distribution can be obtained. It is more preferable that the distance L2 should be equal to or greater than 5 mm. It is more preferable that the distance L2 should be equal to or smaller than 40 mm.

In respect of the suppression of the vertical strain in the puncture state, a maximum thickness of the support layer 16 is preferably equal to or greater than 3 mm, is more preferably equal to or greater than 4 mm and is particularly preferably equal to or greater than 7 mm. In respect of a small weight of the tire 2, the maximum thickness is preferably equal to or smaller than 25 mm and is more preferably equal to or smaller than 20 mm.

The belt 18 is positioned on an outside in the radial direction with respect to the carcass 14. The belt 18 is provided on the carcass 14. The belt 18 reinforces the carcass 14. The belt 18 is formed by an inner layer 58 and an outer layer 60. As is apparent from Fig. 1, a width of the inner layer 58 is slightly greater than a width of the outer layer 60. Each of the inner layer 58 and the outer layer 60 is formed by a large number of cords which are provided in parallel and a topping rubber, which is not shown. Each of the cords is tilted with respect to the equator plane. Usually, an absolute value of a tilt angle is equal to or greater than 10° and is equal to or smaller than 35°. A tilt direction of the cord of the inner layer 58 with respect to the equator plane is reverse to a tilt direction of the cord of the outer layer 60 with respect to the equator plane. A preferable material of the cord is steel. An organic fiber may be used for the cord. It is preferable that a width in the axial direction of the belt 18 should be equal to or greater than 0.85 time as much as a maximum width W (which will be described later in detail) of the tire 2 and be equal to or smaller than 1.0 time as much as the maximum width W. The belt 18 may include three layers or more.

The band 20 covers the belt 18. The band 20 is formed by a cord and a topping rubber, which is not shown. The cord is wound spirally. The band 20 has a so-called jointless structure. The cord is extended substantially in the circumferential direction. An angle of the cord with respect to the circumferential direction is equal to or smaller than 5°, and furthermore, is equal to or smaller than 2°. The belt 18 is restrained by the cord. Therefore, lifting of the belt 18 is suppressed. The cord is constituted by an organic fiber. Examples of a preferable organic fiber include a nylon fiber, a polyester fiber, a rayon fiber, a polyethylene naphthalate fiber and an aramid fiber.

The tire 2 may include an edge band for covering only the vicinity of the end 56 of the belt 18 in place of the band 20. The tire 2 may include the edge band together with the band 20.

The inner liner 22 is bonded to an inner peripheral surface of the carcass 14. The inner liner 22 is constituted by a crosslinked rubber. A rubber having an excellent air insulating property is used for the inner liner 22. The inner liner 22 holds an internal pressure of the tire 2.

As shown in Fig. 1, the tire 2 has a large number of dimples 62 on a side surface thereof. In the present invention, the side surface implies a region in an external surface of the tire 2 which can be visually observed in the axial direction. Typically, the dimple 62 is formed on an external surface of the sidewall 8 or an external surface of the clinch portion 10.

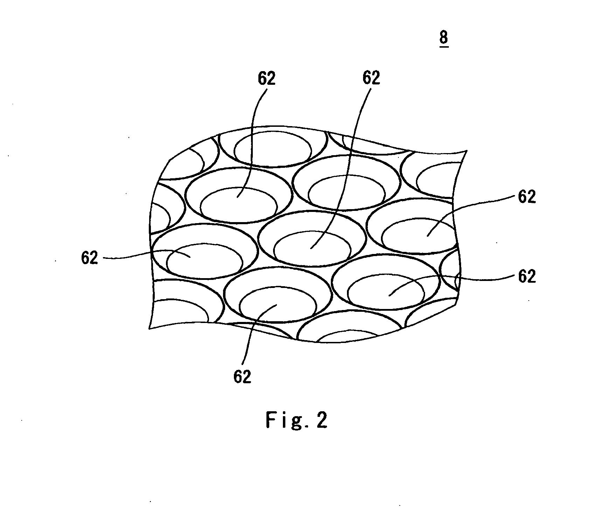

Fig. 2 is an enlarged perspective view showing a part of the sidewall 8 in the tire 2 illustrated in Fig. 1. Fig. 2 shows a large number of dimples 62. A surface of each of the dimples 62 takes a circular shape. In the present invention, the shape of the surface implies a shape of a contour of the dimple 62 in the case in which the dimple 62 is seen at an infinite distance. The circular dimple 62 is similarly formed in the clinch portion 10, which is not shown (see Fig. 1). The dimple 62 may be formed on only the sidewall 8.

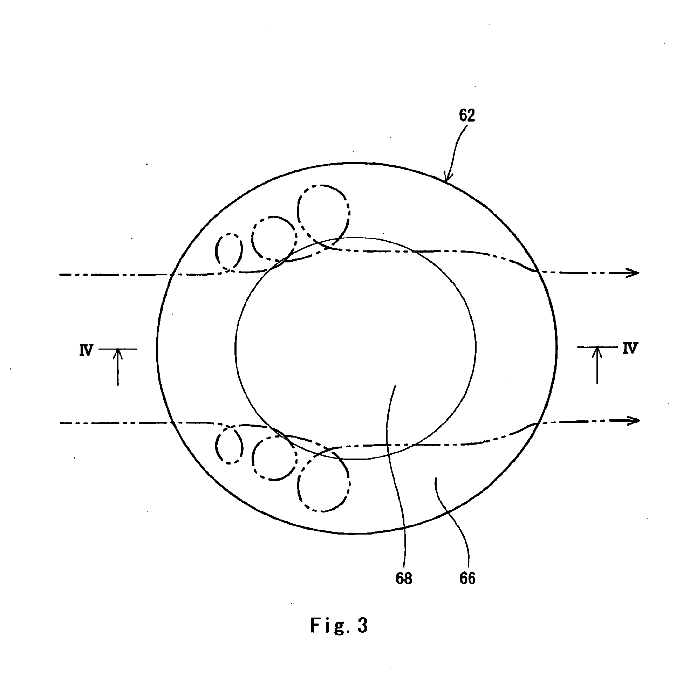

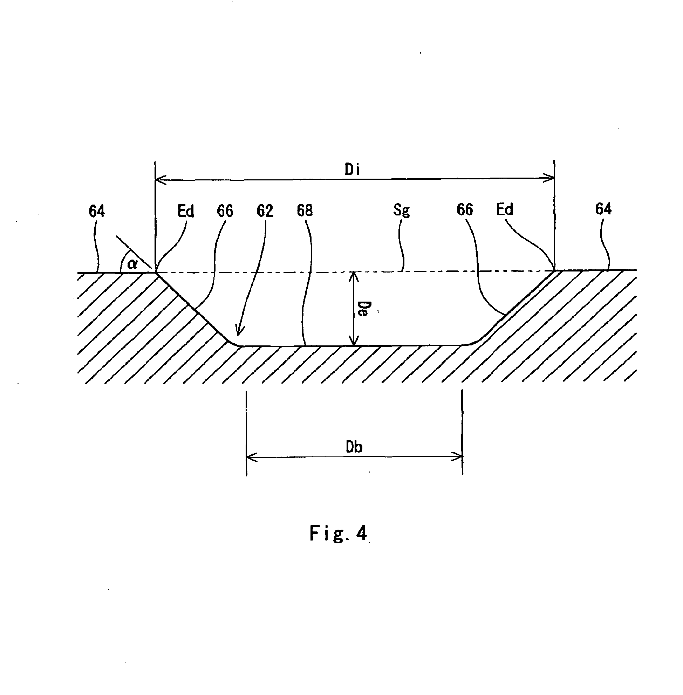

Fig. 3 is an enlarged plan view showing the dimple 62 of the tire 2 in Fig. 1. Fig. 4 is a sectional view taken along a IV - IV line in Fig. 3. Fig. 4 shows a section passing through a center of the dimple 62 and taken along a perpendicular plane to the radial direction of the tire 2. As shown in Fig. 4, the dimple 62 is concaved. A region of the side surface excluding the dimple 62 is indicated as a land 64.

A surface area of the side surface having the dimple 62 is larger than a surface area of the side surface in the case in which it is assumed that the dimple 62 is not provided. A contact area of the tire 2 with an atmosphere is large. By the large contact area, a heat radiation from the tire 2 to the atmosphere is promoted.

The dimple 62 includes a slope surface 66 and a bottom surface 68. The slope surface 66 is ring-shaped. The bottom surface 68 is linked to the slope surface 66. The bottom surface 68 takes a circular shape.

In Fig. 3, an air flow around the tire 2 is shown in a two-dotted chain line. The tire 2 is rotated in a running operation. A vehicle having the tire 2 attached thereto advances. By the rotation of the tire 2 and the advance of the vehicle, the air flows across the dimple 62. The air flows along the land 64 and flows into the dimple 62 along the slope surface 66. The air flows in the dimple 62 and flows along the slope surface 66 at a downstream, and flows out of the dimple 62. The air further flows along the land 64 at the downstream.

As shown in Fig. 3, an eddy is generated in the air flow when the air flows into the dimple 62. In other words, a turbulent flow is generated at an inlet of the dimple 62. When the running operation of the tire 2 is continuously carried out in a puncture state, a deformation and a restoration of the support layer 16 are repeated. By the repetition, heat is generated in the support layer 16. The turbulent flow promotes an emission of the heat to the atmosphere. In the tire 2, a breakage of a rubber member and peeling between the rubber members are inhibited from being caused by the heat. The tire 2 can carry out the running operation for a long time in the puncture state. The turbulent flow also contributes to a heat radiation in a normal state (a state in which a normal internal pressure is applied to the tire 2). The dimple 62 also contributes to the durability of the tire 2 in the normal state. In some cases, the running operation is carried out in a state in which the internal pressure is lower than a normal value due to a carelessness of a driver. The dimple 62 can also contribute to the durability in these cases.

The air forming the eddy flows along the slope surface 66 and the bottom surface 68 in the dimple 62. The air smoothly flows out of the dimple 62. In the tire 2, it is hard to cause a residence which is observed in the conventional tire having a convex portion and the conventional tire having a groove. Accordingly, the heat radiation can be prevented from being impeded by the residence. The tire 2 is very excellent in the durability.

In the tire 2, a rise in a temperature is suppressed by the dimple 62. Even if the support layer 16 is thin, therefore, the running operation can be carried out for a long time in the puncture state. By the thin support layer 16, a small weight of the tire 2 can be achieved. A rolling resistance is controlled by the thin support layer 16. The tire 2 having a small weight and a low rolling resistance contributes to a low fuel consumption of the vehicle. In addition, an excellent ride comfort can also be achieved by the thin support layer 16.

A two-dotted chain line Sg in Fig. 4 indicates a line drawn from one of edges Ed to the other edge Ed in the dimple 62. In Fig. 4, an arrow Di indicates a length of the line Sg and a diameter of the dimple 62. It is preferable that the diameter Di should be equal to or greater than 2 mm and be equal to or smaller than 70 mm. The air sufficiently flows into the dimple 62 having the diameter Di which is equal to or greater than 2 mm. Therefore, the turbulent flow is generated sufficiently. By the dimple 62, the rise in the temperature of the tire 2 is controlled. From this viewpoint, the diameter Di is more preferably equal to or greater than 4 mm, is further preferably equal to or greater than 5 mm, is further preferably equal to or greater than 6 mm, and is particularly preferably equal to or greater than 8 mm. In the tire 2 including the dimple 62 having the diameter Di which is equal to or smaller than 70 mm, the turbulent flow might be generated in a large number of places. In the tire 2 including the dimple 62 having the diameter Di which is equal to or smaller than 70 mm, furthermore, the side surface has a large surface area. By the large surface area, a heat radiation from the tire 2 is promoted. By the dimple 62, the rise in the temperature of the tire 2 is controlled. From this viewpoint, the diameter Di is more preferably equal to or smaller than 50 mm, is more preferably equal to or smaller than 40 mm, is further preferably equal to or smaller than 30 mm, and is particularly preferably equal to or smaller than 18 mm. In the case in which a diameter Di of a non-circular dimple is determined, a circular dimple having an equal area to an area of the non-circular dimple is assumed. A diameter of the circular dimple is defined to be the diameter Di of the non-circular dimple.

The tire 2 may have at least two types of dimples 62 which have different diameters Di from each other. In the tire 2 having the at least two types of dimples 62, an average diameter of the dimple is preferably equal to or greater than 2 mm, is more preferably equal to or greater than 4 mm, is further preferably equal to or greater than 5 mm, is further preferably equal to or greater than 6 mm, and is particularly preferably equal to or greater than 8 mm. The average diameter is preferably equal to or smaller than 70 mm, is more preferably equal to or smaller than 50 mm, is more preferably equal to or smaller than 40 mm, is further preferably equal to or smaller than 30 mm, and is particularly preferably equal to or smaller than 18 mm. A ratio of the number of the dimples having the diameter Di within the range described above to the total number of the dimples is preferably equal to or higher than 50% and is more preferably equal to or higher than 70%. Ideally, the ratio is 100%.

In Fig. 4, an arrow De denotes a depth of the dimple 62. The depth De indicates a distance between the deepest part of the dimple 62 and the line Sg. It is preferable that the depth De should be equal to or greater than 0. 1 mm and be equal to or smaller than 7 mm. In the dimple 62 having the depth De which is equal to or greater than 0.1 mm, a sufficient turbulent flow is generated. From this viewpoint, the depth De is more preferably equal to or greater than 0.2 mm, is further preferably equal to or greater than 0.3 mm, is further preferably equal to or greater than 0.5 mm, is further preferably equal to or greater than 0.7 mm, and is particularly preferably equal to or greater than 1.0 mm. In the dimple 62 having the depth De which is equal to or smaller than 7 mm, the residence of the air is caused in a bottom with difficulty. In the tire 2 having the depth De of the dimple 62 which is equal to or smaller than 7 mm, furthermore, the sidewall 8, the clinch portion 10 and the like have sufficient thicknesses. From this viewpoint, the depth De is more preferably equal to or smaller than 4 mm, is further preferably equal to or smaller than 3.0 mm and is particularly preferably equal to or smaller than 2.0 mm.

The tire 2 may have at least two types of dimples 62 which have different depths De from each other. In the tire 2 having the at least two types of dimples 62, an average depth of the dimple is preferably equal to or greater than 0.1 mm, is more preferably equal to or greater than 0.2 mm, is further preferably equal to or greater than 0.3 mm, is further preferably equal to or greater than 0.5 mm, is further preferably equal to or greater than 0.7 mm, and is particularly preferably equal to or greater than 1.0 mm. The average depth is preferably equal to or smaller than 7. 0 mm, is more preferably equal to or smaller than 4.0 mm, is further preferably equal to or smaller than 3.0 mm, and is particularly preferably equal to or smaller than 2.0 mm. A ratio of the number of the dimples having the depth De within the range described above to the total number of the dimples is preferably equal to or higher than 50% and is more preferably equal to or higher than 70%. Ideally, the ratio is 100%.

It is preferable that a ratio (De/Di) of the depth De to the diameter Di should be equal to or higher than 0.01 and be equal to or lower than 0.5. In the dimple 62 having the ratio (De/Di) which is equal to or higher than 0.01, a sufficient turbulent flow is generated. From this viewpoint, the ratio (De/Di) is more preferably equal to or higher than 0.03 and is particularly preferably equal to or higher than 0.05. In the dimple 62 having the ratio (De/Di) which is equal to or lower than 0.5, the residence of the air is caused in the bottom with difficulty. From this viewpoint, the ratio (De/Di) is more preferably equal to or lower than 0.4 and is particularly preferably equal to or lower than 0.3.

It is preferable that a volume of the dimple 62 should be equal to or greater than 1.0 mm$^3$ and be equal to or smaller than 400 mm$^3$. In the dimple 62 having a volume which is equal to or greater than 1.0 mm$^3$, a sufficient turbulent flow is generated. From this viewpoint, the volume is more preferably equal to or greater than 1.5 mm$^3$ and is particularly preferably equal to or greater than 2.0 mm$^3$. In the dimple 62 having a volume which is equal to or smaller than 400 mm$^3$, the residence of the air is caused in the bottom with difficulty. In the tire 2 having the volume of the dimple 62 which is equal to or smaller than 400 mm$^3$, furthermore, the sidewall 8, the clinch portion 10 and the like have sufficient rigidities. From this viewpoint, the volume is more preferably equal to or smaller than 300 mm$^3$ and is particularly preferably equal to or smaller than 250 mm$^3$.

It is preferable that a total value of the volumes of all the dimples 62 should be equal to or greater than 300 mm$^3$ and be equal to or smaller than 5000000 mm$^3$. In the tire 2 having the total value which is equal to or greater than 300 mm$^3$, a sufficient heat radiation is carried out. From this viewpoint, the total value is more preferably equal to or greater than 600 mm$^3$ and is particularly preferably equal to or greater than 800 mm$^3$. In the tire 2 having the total value which is equal to or smaller than 5000000 mm$^3$, the sidewall 8, the clinch portion 10 and the like have sufficient rigidities. From this viewpoint, the volume is more preferably equal to or smaller than 1000000 mm$^3$ and is particularly preferably equal to or smaller than 500000 mm$^3$.

It is preferable that an area of the dimple 62 should be equal to or greater than 3 mm$^2$ and be equal to or smaller than 4000 mm$^2$. In the dimple 62 having an area which is equal to or greater than 3 mm$^2$, a sufficient turbulent flow is generated. From this viewpoint, the area is more preferably equal to or greater than 12 mm$^2$ and is particularly preferably equal to or greater than 20 mm$^2$. In the tire 2 having the area of the dimple 62 which is equal to or smaller than 4000 mm$^2$, the sidewall 8, the clinch portion 10 and the like have sufficient strengths. From this viewpoint, the area is more preferably equal to or smaller than 2000 mm$^2$ and is particularly preferably equal to or smaller than 1300 mm$^2$. In the present invention, the area of the dimple 62 implies an area of a region which is surrounded by a contour of the dimple 62. In case of the circular dimple 62, an area S is calculated in accordance with the following equation.

$$S = (Di / 2)^2 * \pi$$

In the present invention, an occupancy ratio Y of the dimple 62 is calculated in accordance with the following equation.

$$Y = (S1 / S2) * 100$$

In the equation, S1 represents the total area of the dimples 62 included in a reference region and S2 represents a surface area of the reference region on the assumption that the dimple 62 is not provided. The reference region indicates a region in the side surface in which a height from the base line BL is equal to or greater than 20% of the height H of the tire 2 and is equal to or smaller than 80% thereof. It is preferable that the occupancy ratio Y should be equal to or higher than 10% and be equal to or lower than 85%. In the tire 2 having the occupancy ratio Y which is equal to or higher than 10%, a sufficient heat radiation is carried out. From this viewpoint, the occupancy ratio Y is more preferably equal to or higher than 30% and is particularly preferably equal to or higher than 40%. In the tire 2 having the occupancy ratio Y which is equal to or lower than 85%, the land 64 has a sufficient abrasion resistance. From this viewpoint, the occupancy ratio Y is more preferably equal to or lower than 80% and is particularly preferably equal to or lower than 75%.

It is preferable that an interval between the adjacent dimples 62 to each other should be equal to or greater than 0. 05 mm and be equal to or smaller than 20 mm. In the tire 2 having the interval which is equal to or greater than 0.05 mm, the land 64 has a sufficient abrasion resistance. From this viewpoint, the interval is more preferably equal to or greater than 0.10 mm and is particularly preferably equal to or greater than 0.2 mm. In the tire 2 having the interval which is equal to or smaller than 20 mm, a turbulent flow might be generated in a large number of places. From this viewpoint, the interval is more preferably equal to or smaller than 15 mm and is particularly preferably equal to or smaller than 10 mm.

It is preferable that a total number of the dimples 62 should be equal to or greater than 50 and be equal to or smaller than 5000. In the tire 2 having the total number which is equal to or greater than 50, the turbulent flow might be generated in a large number of places. From this viewpoint, the total number is more preferably equal to or greater than 100 and is particularly preferably equal to or greater than 150. In the tire 2 having the total number which is equal to or smaller than 5000, the individual dimple 62 can have a sufficient size. From this viewpoint, the total number is more preferably equal to or smaller than 2000 and is particularly preferably equal to or smaller than 1000. The total number and a dimple pattern can be properly determined depending on a size of the tire and an area of a side portion.

The tire 2 may have a non-circular dimple in place of the circular dimple 62 or together with the circular dimple 62. A typical non-circular dimple takes a planar shape of a polygon. The tire 2 may have a dimple of which planar shape is elliptical or oblong. The tire 2 may have a dimple taking a planar shape of a teardrop. The tire 2 may have a convex portion together with the dimple.

Since the tire 2 is rotated, a direction of an air flow with respect to the dimple is not constant. Accordingly, the dimple 62 having no directivity, that is, the dimple 62 taking a planar shape of a circle is the most preferable for the tire 2. A rotating direction of the tire 2 may be taken into consideration to dispose a dimple having the directivity.

In the present invention, the "dimple" can be clearly distinguished from a groove provided in the conventional tire. The groove has a greater length than a width. In the tire having the groove, the residence of the air is apt to be caused. On the other hand, a ratio of a major axis to a minor axis is low in the dimple. In the tire having the dimple, accordingly, the residence of the air is caused with difficulty. The ratio of the major axis to the minor axis is preferably equal to or lower than 3.0, is more preferably equal to or lower than 2.0 and is particularly preferably equal to or lower than 1.5. In the circular dimple, the ratio is 1.0. The major axis implies a length of the longest line which can be drawn in a contour when the dimple is seen at an infinite distance. The minor axis implies a size of the dimple in an orthogonal direction to the longest line.

As shown in Fig. 2, in the tire 2, a large number of dimples 62 are disposed zigzag. Accordingly, six dimples 62 are adjacent to a single dimple 62. In the tire 2 having the arrangement, a place in which a turbulent flow is generated is distributed uniformly. In the tire 2, heat is uniformly emitted from the side surface. The arrangement is excellent in a cooling effect. The large number of dimples 62 may be disposed randomly.

As shown in Fig. 4, the dimple 62 takes a sectional shape of a trapezoid. In other words, the dimple 62 takes a shape of a truncated cone. In the dimple 62, a volume is rather great for the depth De. Accordingly, the sufficient volume and the small depth De can be consistent with each other. By setting the small depth De, the sidewall 8, the clinch portion 10 and the like can have sufficient thicknesses under the dimple 62. The dimple 62 can contribute to the rigidity of the side surface.

In Fig. 4, the designation "$\alpha$" denotes an angle of the slope surface 66. It is preferable that the angle "$\alpha$" should be equal to or greater than 10° and be equal to or smaller than 70°. In the dimple 62 having the angle "$\alpha$" which is equal to or greater than 10°, the sufficient volume and the small depth De can be consistent with each other. From this viewpoint, the angle "$\alpha$" is more preferably equal to or greater than 20° and is particularly preferably equal to or greater than 25°. In the dimple 62 having the angle "$\alpha$" which is equal to or smaller than 70°, the air smoothly flows. From this viewpoint, the angle is more preferably equal to or smaller than 60° and is particularly preferably equal to or smaller than 55°.

In Fig. 4, an arrow Db denotes a diameter of the bottom surface 68. It is preferable that a ratio (Db/Di) of the diameter Db to the diameter Di should be equal to or higher than 0. 40 and be equal to or lower than 0.95. In the dimple 62 having the ratio (Db/Di) which is equal to or higher than 0.40, the sufficient volume and the small depth De can be consistent with each other. From this viewpoint, the ratio (Db/Di) is more preferably equal to or higher than 0.55 and is particularly preferably equal to or higher than 0.65. In the dimple 62 having the ratio (Db/Di) which is equal to or lower than 0.95, the air smoothly flows. From this viewpoint, the ratio (Db/Di) is more preferably equal to or lower than 0.85 and is particularly preferably equal to or lower than 0.80.

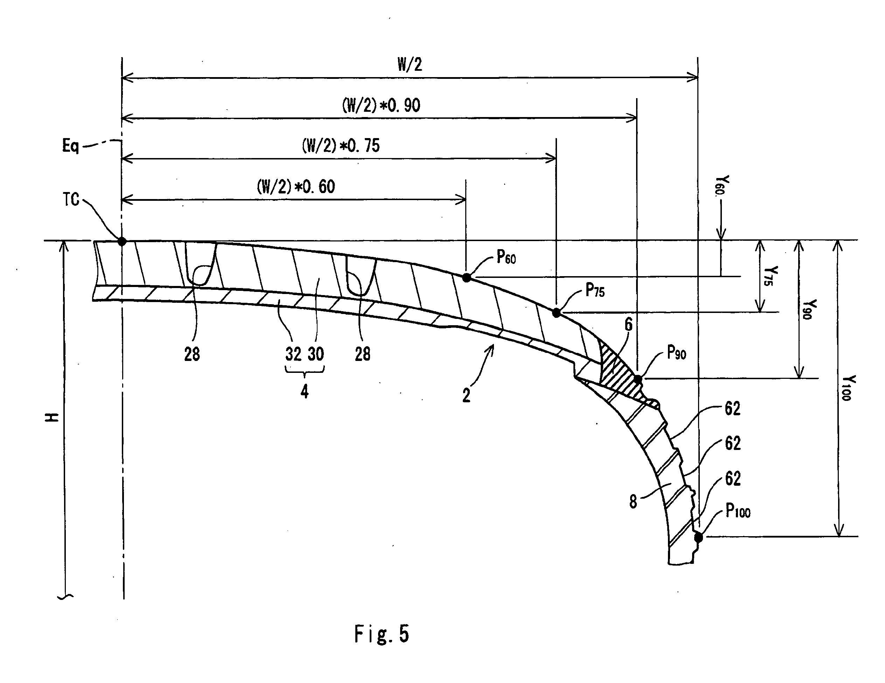

Fig. 5 is a sectional view showing a part of the tire 2 in Fig. 1. Fig. 5 shows the tread 4, the wing 6 and the sidewall 8. A shape of a surface reaching the sidewall 8 from the tread 4 via the wing 6 is referred to as a profile. The profile is determined on the assumption that concavo-convex portions such as the groove 28 or the dimple 62 are not provided. In Fig. 5, an arrow W/2 indicates a half of a width W of the tire 2. The width W is determined by setting, as a reference, a point $P_{100}$ on an outermost side in the axial direction except for the rib 34 (see Fig. 1). The profile reaches the point $P_{100}$ from a center point TC. In Fig. 5, points $P_{60}$, $P_{75}$ and $P_{90}$ represent points on the profile in which distances in the axial direction from the center point TC are 60%, 75% and 90% of the half (W/2) of the width of the tire 2, respectively.

The tire 2 has a CTT profile. In the CTT profile, a curvature radius is gradually decreased between the center point TC and the point $P_{90}$. The CTT profile is typically determined based on an involute curve. The CTT profile may include a portion constituted by a large number of circular arcs which approximate to the involute curve. In the tire 2 shown in Fig. 5, the profile is constituted by the large number of circular arcs which approximate to the involute curve between the center point TC and the point $P_{90}$. The number of the circular arcs is preferably equal to or greater than three and is more preferably equal to or greater than five. The CTT profile may be determined depending on other function curves.

In the case in which the CTT profile includes a large number of circular arcs which approximate to the function curve, each of the circular arcs is provided in contact with a circular arc which is adjacent thereto. A curvature radius of each of the circular arcs is smaller than a curvature radius of the circular arc on an inside thereof in the axial direction.

In Fig. 5, $Y_{60}$ represents a distance in the radial direction between the point TC and the point $P_{60}$, $Y_{75}$ represents a distance in the radial direction between the point TC and the point $P_{75}$, $Y_{90}$ represents a distance in the radial direction between the point TC and the point $P_{90}$, and $Y_{100}$ represents a distance in the radial direction between the point TC and the point $P_{100}$. The CTT profile satisfies the following equations (1) to (4).

$$0.05 < Y_{60}/H \leqq 0.10 \qquad (1)$$

$$0.10 < Y_{75}/H \leqq 0.2 \qquad (2)$$

$$0.2 < Y_{90}/H \leqq 0.4 \qquad (3)$$

$$0.4 < Y_{100}/H \leqq 0.7 \qquad (4)$$

The CTT profile contributes to various performances of the tire 2. In the profile, a contact width in an addition of 80% of a normal load to the tire 2 is equal to or greater than 0.50 time as much as the maximum width W of the tire 2 and is equal to or smaller than 0.65 time as much as the maximum width W.

In the tire 2 including the CTT profile, an appropriate shape of a contact surface is obtained. By the contact surface, an excellent ride comfort can be obtained. In the tire 2 including the CTT profile, a deformation of the support layer 16 which is repeated in a running operation in a normal state is great. In the tire 2, heat is apt to be generated. In the tire 2, a heat radiation of the dimple 62 exhibits a particularly remarkable effect.

The dimple 62 having the size, the shape and the total number exhibits the effect in tires having various sizes. In case of a tire of a passenger car, if a width is equal to or greater than 100 mm and is equal to or smaller than 350 mm, an aspect ratio is equal to or higher than 30% and is equal to or lower than 100% and a rim diameter is equal to or greater than 10 inches and is equal to or smaller than 25 inches, the dimple 62 exhibits the effect.

In a manufacture of the tire 2, a plurality of rubber members is assembled so that a raw cover (an unvulcanized tire) is obtained. The raw cover is put in a mold. An external surface of the raw cover abuts on a cavity surface of the mold. An internal surface of the raw cover abuts on a bladder or an insert core. The raw cover is pressurized and heated in the mold. By the pressurization and the heating, a rubber composition of the raw cover flows. By the heating, a rubber makes a crosslinking reaction so that the tire 2 is obtained. By using a mold having a pimple on the cavity surface, the dimple 62 is formed on the tire 2.

The dimension and the angle in each portion of the tire 2 are measured in a state in which the tire 2 is incorporated in a normal rim and is filled with air to obtain a normal internal pressure if there is no particular description. During the measurement, a load is not applied to the tire 2. In this specification, the normal rim implies a rim determined in rules on which the tire 2 depends. A "standard rim" in the JATMA rules, a "Design Rim" in the TRA rules and a "Measuring Rim" in the ETRTO rules are included in the normal rim. In this specification, the normal internal pressure implies an internal pressure determined in the rules on which the tire 2 depends. A "maximum air pressure" in the JATMA rules, a "maximum value" described in "TIRE LOAD LIMITS AT VARIOUS COLD INFLATION PRESSURES" in the TRA rules and an "INFLATION PRESSURE" in the ETRTO rules are included in the normal internal pressure. In case of the tire 2 of the passenger car, the dimension and the angle are measured with an internal pressure of 180 kPa.

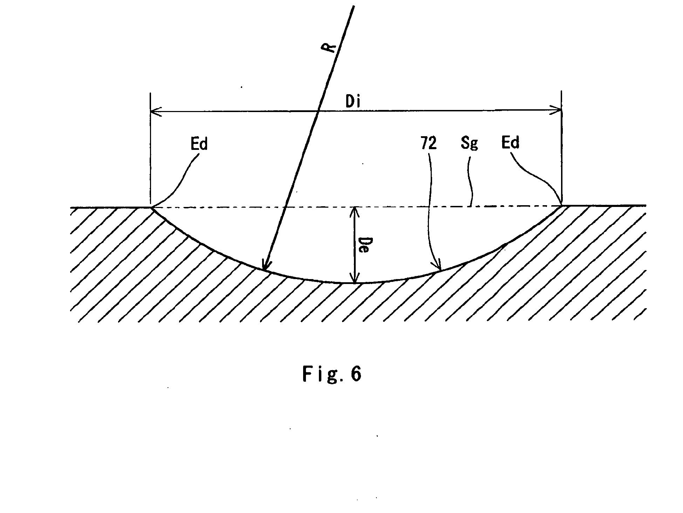

Fig. 6 is a sectional view showing a part of a tire according to another embodiment of the present invention. Fig. 6 shows the vicinity of a dimple 72. Structures other than the dimple 72 in the tire are equivalent to the structure of the tire 2 shown in Fig. 1.

The dimple 72 takes a planar shape of a circle. The dimple 72 takes a sectional shape of a circular arc. In other words, the dimple 72 forms a part of a sphere. In the tire, air smoothly flows out of the dimple 72. In the dimple 72, the residence of the air is suppressed. In the tire, a sufficient heat radiation is carried out.

In Fig. 6, an arrow R indicates a curvature radius of the dimple 72. It is preferable that the curvature radius R should be equal to or greater than 3 mm and be equal to or smaller than 200 mm. In the dimple 72 having the curvature radius R which is equal to or greater than 3 mm, the air smoothly flows. From this viewpoint, the curvature radius R is more preferably equal to or greater than 5 mm and is particularly preferably equal to or greater than 7 mm. In the dimple 72 having the curvature radius R which is equal to or smaller than 200 mm, a sufficient volume of dimple can be achieved. From this viewpoint, the curvature radius R is more preferably equal to or smaller than 100 mm and is particularly preferably equal to or smaller than 50 mm. Specifications, for example, a diameter Di, a depth De, a volume, an area, a ratio (De/Di) and the like of the dimple 72 are equivalent to those of the dimple 62 shown in Fig. 4.

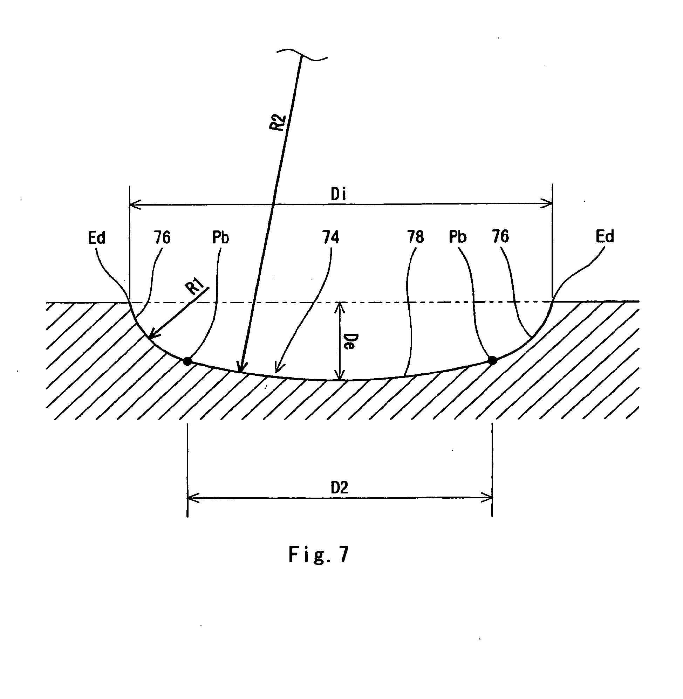

Fig. 7 is a sectional view showing a part of a tire according to a further embodiment of the present invention. Fig. 7 shows the vicinity of a dimple 74. Structures other than the dimple 74 in the tire are equivalent to the structure of the tire 2 shown in Fig. 1.

The dimple 74 takes a planar shape of a circle. The dimple 74 includes a first curved surface 76 and a second curved surface 78. The first curved surface 76 is ring-shaped. The second curved surface 78 is cup-shaped. In Fig. 7, the designation Pb denotes a boundary point between the first curved surface 76 and the second curved surface 78. The second curved surface 78 is provided in contact with the first curved surface 76 at the boundary point Pb. The dimple 74 is of a so-called double radius type. Specifications, for example, a diameter Di, a depth De, a volume, an area, a ratio (De/Di) and the like of the dimple 74 are equivalent to those of the dimple 62 shown in Fig. 4.

In Fig. 7, an arrow R1 indicates a curvature radius of the first curved surface 76 and an arrow R2 indicates a curvature radius of the second curved surface 78. The curvature radius R1 is smaller than the curvature radius R2. It is preferable that a ratio (R1/R2) of the curvature radius R1 to the curvature radius R2 should be equal to or higher than 0.1 and be equal to or lower than 0.8. In the dimple 74 having the ratio (R1/R2) which is equal to or higher than 0.1, air smoothly flows. From this viewpoint, the ratio (R1/R2) is more preferably equal to or higher than 0.2 and is particularly preferably equal to or higher than 0.3. In the dimple 74 having the ratio (R1/R2) which is equal to or lower than 0.8, a sufficient volume and a small depth De can be consistent with each other. From this viewpoint, the ratio (R1/R2) is more preferably equal to or lower than 0.7 and is particularly preferably equal to or lower than 0.6.

In Fig. 7, an arrow D2 indicates a diameter of the second curved surface 78. It is preferable that a ratio (D2/Di) of the diameter D2 to the diameter Di should be equal to or higher than 0.40 and be equal to or lower than 0.95. In the dimple 74 having the ratio (D2/Di) which is equal to or higher than 0.40, the sufficient volume and the small depth De can be consistent with each other. From this viewpoint, the ratio (D2/Di) is more preferably equal to or higher than 0.55 and is particularly preferably equal to or higher than 0.65. In the dimple 74 having the ratio (D2/Di) which is equal to or lower than 0.95, the air smoothly flows. From this viewpoint, the ratio (D2/Di) is more preferably equal to or lower than 0.85 and is particularly preferably equal to or lower than 0.80.

[Analysis Example 1]

[Model 1]

There was created a model in which a first rubber sheet and a second rubber sheet were laminated and the dimples shown in Figs. 2 to 4 were formed on a surface of the second rubber sheet. The first rubber sheet and the second rubber sheet have thicknesses of 10 mm, respectively. A specification of the dimple is as follows.

Diameter Di : 7.8 mm
Diameter Db : 5.8 mm
Depth De : 1.0 mm
Distance between centers of dimples : 8.0 mm

[Model 2]
There was created the same model 2 as the model 1 except that a ridges (convex portions) ware formed in place of the dimple. A specification of the convex portion is as follows.

Height : 3.0 mm
Width : 2.0 mm
Distance between convex portions : 30.0 mm

[Model 3]
The same model 3 as the model 1 was created except that the dimple was not formed.
By using the models 1 to 3, the effect of the present invention was confirmed through a computer simulation. A physical property value of a rubber which was used in the analysis is as follows.

Density : 1100 kg/m$^3$
Thermal conductivity : 0.35 W/m·K
Specific heat : 1350 J/(kg·K)

A physical property value of air used in the analysis is as follows.

Density : 1.205 kg/m$^3$
Coefficient of viscosity : 1.81 * 10$^{-5}$ Pa·s
Thermal conductivity : 2.637 * 10$^{-2}$ W/m·K
Specific heat : 1006 J/(kg·K)

A condition of the analysis is as follows.

Temperature of atmosphere : 20°C
Average speed of air : 33.3 m/s
Temperature of air in place disposed apart from lower surface of first rubber sheet by 15 cm : 100°C
Calorific value in first rubber sheet : 2.0 * 10$^5$ W/m$^3$ The result of the analysis is shown in the following Table 1.

[Table 1]

Table 1 Result of Analysis

|  | Model 1 | Model 2 | Model 3 |
|---|---|---|---|
| Shape of surface | Dimple | Ridge | Flat |
| Surface area ratio | 1.16 | 1.20 | 1.00 |
| Temperature of first rubber sheet (°C) | 144 | 149 | 150 |
| Temperature of second rubber sheet (°C) | 56 | 87 | 93 |
| Surface temperature (°C) | 46 | 53 | 60 |

As shown in the Table 1, the temperature of each portion is low in the model 1. The reason is that a heat radiation is promoted by a dimple.

[Analysis Example 2]

[Model 4]

A model 4 was created in the same manner as the model 1 except that the specification of the dimple was set as follows.

Diameter Di : 5 mm
Depth De : 1.00 mm
Angle $\alpha$ : 45°
Interval between dimples : 3.0 mm

[Models 5 to 30]
Models 5 to 30 were created in the same manner as the model 4 except that the specification of the dimple was set as shown in the following Tables 2 and 3.

[Model 31]

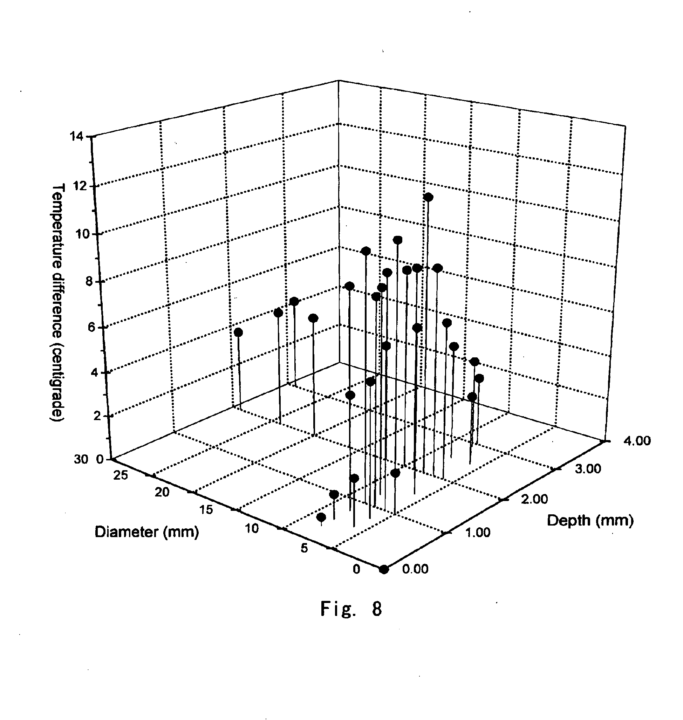

The same model 31 as the model 4 was created except that the dimple was not formed.
A simulation was carried out by the same method as in the analysis example 1 to obtain a surface temperature of the second rubber sheet. A difference from a surface temperature of the model 31 was calculated. The result is shown in the following Tables 2 and 3 and Fig. 8.
[Table 2]

Table 2 Result of Analysis

| Model number | 31 | 4 | 5 | 6 | 7 | 8 | 9 | 10 | 11 | 12 | 13 | 14 | 15 | 16 |
|---|---|---|---|---|---|---|---|---|---|---|---|---|---|---|
| Diameter (mm) | - | 5 | 6 | 6 | 6 | 6 | 6 | 6 | 7 | 7 | 8 | 8 | 8 | 8 |
| Depth (mm) | - | 1.00 | 0.50 | 0.75 | 1.00 | 1.50 | 2.00 | 2.50 | 1.00 | 2.00 | 0.30 | 0.50 | 0.75 | 1.00 |
| Temperature (°C) | - | 1.8 | 2.1 | 5.8 | 7 | 7.2 | 6.9 | 3.1 | 8.9 | 9.1 | 0.4 | 1.1 | 5 | 10.6 |

[Table 3]

Table 3 Result of Analysis

| Model number | 17 | 18 | 19 | 20 | 21 | 22 | 23 | 24 | 25 | 26 | 27 | 28 | 29 | 30 |
|---|---|---|---|---|---|---|---|---|---|---|---|---|---|---|
| Diameter (mm) | 8 | 8 | 8 | 8 | 8 | 8 | 9 | 10 | 12 | 16 | 20 | 24 | 29 | 29 |
| Depth (mm) | 1.25 | 1.50 | 2.00 | 2.50 | 2.90 | 3.00 | 2.00 | 2.00 | 2.00 | 2.00 | 2.00 | 2.00 | 2.00 | 3.00 |
| Temperature (°C) | 8.9 | 10.6 | 11.9 | 5.1 | 4 | 3.1 | 8.9 | 8.7 | 8.4 | 7.4 | 5.5 | 5.3 | 3.8 | 4.3 |

As shown in the Tables 2 and 3, the surface temperatures of the models 4 to 30 are lower than the surface temperature of the model 31. The reason is that the heat radiation is promoted by the dimple.

**Examples**

Although the effect of the present invention will be apparent from the examples, the present invention should not be construed to be restrictive based on the description of the examples.

[Example 1]

There was obtained a tire including the dimples shown in Figs. 2 to 4. A specification of the dimple is as follows:

Diameter Di : 8 mm
Depth De : 1.0 mm
Angle $\alpha$ : 45°
Total number of dimples : 200

The tire has a size of "245/40R18".

[Examples 2 to 9]

Tires according to examples 2 to 9 were obtained in the same manner as the example 1 except that the specification of the dimple was set as shown in the following Table 4.

[Comparative Example 1]

A tire according to a comparative example 1 was obtained in the same manner as in the example 1 except that the dimple was not provided.

[Running Test]

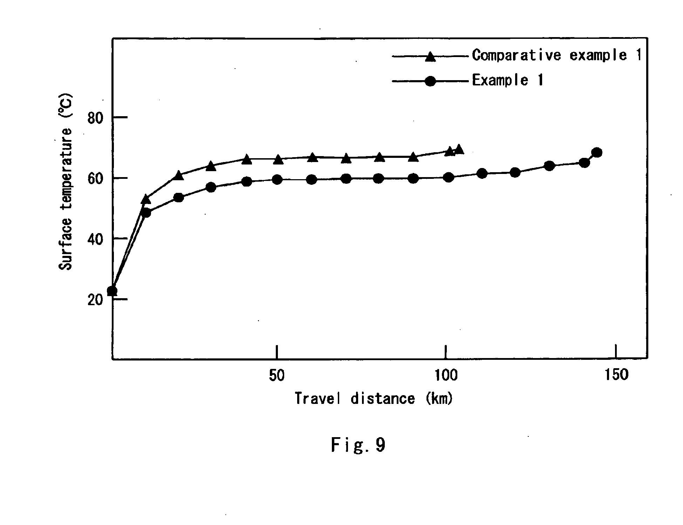

A tire was incorporated into a rim of "18 x 8.5J" and was filled with air to have an internal pressure of 230 kPa. The tire was attached to a left rear wheel of a passenger car which had an engine displacement of 4300 cc and which was a front engine - rear drive type. A valve core of the tire was pulled out to cause an inner part of the tire to communicate with an atmosphere. A tire having the internal pressure of 230 kPa was attached to left front, right front and right rear wheels of the passenger car. A driver was caused to drive the passenger car at a speed of 80 km/h over a test course. A travel distance was measured until the tire was broken. The result is shown as an index in the following Table 4. A relationship between a travel distance and a surface temperature in each of the tires according to the example 1 and the comparative example 1 is shown in Fig. 9.

[Table 4]

Table 4 Result of Evaluation

|  | Compa. Example 1 | Example 2 | Example 3 | Example 4 | Example 1 | Example 5 | Example 6 | Example 7 | Example 8 | Example 9 |
|---|---|---|---|---|---|---|---|---|---|---|
| Dimpla | No | Yes | Yes | Yes | Yes | Yes | Yes | Yes | Yes | Yes |
| Diameter (mm) | - | 8 | 8 | 8 | 8 | 8 | 8 | 5 | 10 | 20 |
| Depth (mm) | - | 0.3 | 0.5 | 0.8 | 1.0 | 2.0 | 3.0 | 1.0 | 1.0 | 1.0 |
| Trabel distance (index) | 100 | 110 | 127 | 132 | 140 | 147 | 144 | 104 | 143 | 141 |

As shown in the Table 4, the travel distance of the tire according to each of the examples is greater than that according to the comparative example 1. From the result of the evaluation, advantages of the present invention are apparent.

**INDUSTRIAL APPLICABILITY**

A heat radiating effect of a dimple can also be obtained in a tire other than a run flat tire. A pneumatic tire according to the present invention can be attached to various vehicles.

**Claims**

1. A pneumatic run flat tire (2) comprising:

   a tread (4) including a profile having a plurality of circular arcs in different curvature radii from each other;
   a pair of sidewalls (8) extended almost inward in a radial direction from an end of the tread (4), respectively;
   a pair of beads (12) positioned on an almost inside in the radial direction with respect to the sidewalls (8), respectively;
   a carcass (14) laid between both of the beads (12) along the tread (4) and the sidewalls (8);
   a reinforcing layer positioned on an inside of the tread (4) and a outside of the carcass (14) in the radial direction; and
   a support layer (16) positioned on an inside in an axial direction with respect to the sidewall (8),
   **characterized in that**
   a side surface of the tire has a large number of dimples (62), wherein the dimples (62) are in the shape of a truncated cone.

2. The run flat tire according to claim 1, wherein the dimple(62) has a diameter (Di) which is equal to or greater than 6 mm and is equal to or smaller than 18 mm.

3. The run flat tire according to claim 1 or 2, wherein the dimple (62) has a depth (De) which is equal to or greater than 0.5 mm and is equal to or smaller than 3.0 mm.

4. The run flat tire according to any of claims 1 to 3, wherein a profile from a center point (TC) of a surface of the tread (4) to a point $P_{90}$ on which a distance in the axial direction from the center point (TC) is 90% of a half of a width (W/2) of the tire is formed by a plurality of circular arcs,
   each of the circular arcs is provided in contact with the circular arc which is adjacent thereto, and
   a curvature radius of each of the circular arcs is smaller than a curvature radius of the circular arc on an inside in the axial direction therefrom, and the profile satisfies the following equations (1) to (4) :

$$0.05 < Y_{60}/H \leq 0.10 \quad (1)$$

$$0.10 < Y_{75}/H \leq 0.2 \quad (2)$$

$$0.2 < Y_{90}/H \leq 0.4 \quad (3)$$

$$0.4 < Y_{100}/H \leq 0.7 \quad (4),$$

   wherein, in equations (1) to (4), H represents a height of the tire, $Y_{60}$, $Y_{75}$, $Y_{90}$ and $Y_{100}$ represent distances in the radial direction between the center point (TC) and the points $P_{60}$, $P_{75}$, $P_{90}$ and $P_{100}$, respectively, wherein the points $P_{60}$, $P_{75}$, $P_{90}$ and $P_{100}$ indicate points on the profile in which the distances in the axial direction from the center point (TC) are 60%, 75%, 90% and 100% of the half of the width of the tire, respectively.

5. The run flat tire according to any of claims 1 to 4, wherein the dimple (62) has a ring-shaped slope surface (66) and a circular shaped bottom surface (68) lined to the slope surface (66), and an angle ($\alpha$) formed by the slope surface (66) with respect to the bottom surface (68) is equal to or greater than 10° and is equal to or smaller than 70°.

6. The run flat tire according to any of claims 1 to 5, wherein a total value of the volumes of all the dimples (62) is equal to or greater than 300 mm$^3$ and is equal to or smaller than 5000000 mm$^3$.

7. The run flat tire according to any of claims 1 to 6, wherein a total lnumber of the dimples (62) is equal to or greater than 50 and is equal to or smaller than 5000.

8. The run flat tire according to any of claims 1 to 7, wherein the bead has a core (38), and
wherein an occupancy ratio Y of the dimple (62) is equal to or higher than 10% and is equal to or lower than 85%, the occupancy ratio Y of the dimple (62) in a reference region being calculated in accordance with the following equation:

$$Y = ( S1 / S2 ) * 100;$$

wherein S1 represents the total area of the dimples (62) included in a reference region and S2 represents a surface area of the reference region on the assumption that the dimple (62) is not provided;
the reference region indicates a region in the side surface in which a height (H) from a base line (BL) is equal to or greater than 20% of the height (H) of the tire (2) and is equal to or smaller than 80% thereof;
the base line (BL) passes through an innermost point in the radial direction of the core (38) and is extended in the axial direction.

**Patentansprüche**

1. Notlauf-Luftreifen (2), umfassend:

eine Lauffläche (4), die ein Profil umfasst, das eine Mehrzahl von Kreisbögen mit voneinander verschiedenen Krümmungsradien aufweist;
ein Paar Seitenwände (8), die sich jeweils nahezu nahe nach innen in einer radialen Richtung von einem Ende der Lauffläche (4) aus erstrecken;
ein Paar Wülste (12), die jeweils an einer nahezu innen liegenden Seite in der radialen Richtung mit Bezug auf die Seitenwände (8) angeordnet sind;
eine Karkasse (14), die zwischen beide Wülste (12) entlang der Lauffläche (4) und der Seitenwände (8) gelegt ist;
eine Verstärkungsschicht, die an einer Innenseite der Lauffläche (4) und einer Außenseite der Karkasse (14) in der radialen Richtung angeordnet ist; und
eine Stützschicht (16), die an einer Innenseite in einer axialen Richtung mit Bezug auf die Seitenwand (8) angeordnet ist,
**dadurch gekennzeichnet, dass**
eine Seitenfläche des Reifens eine große Zahl Vertiefungen (62) aufweist, wobei die Vertiefungen (62) die Form eines Kegelstumpfes aufweisen.

2. Notlaufreifen nach Anspruch 1,
wobei die Vertiefung (62) einen Durchmesser (Di) aufweist, der gleich oder größer als 6 mm ist und gleich oder kleiner als 18 mm ist.

3. Notlaufreifen nach Anspruch 1 oder 2,
wobei die Vertiefung (62) eine Tiefe (De) aufweist, die gleich oder größer als 0,5 mm ist und gleich oder kleiner als 3,0 mm ist.

4. Notlaufreifen nach einem der Ansprüche 1 bis 3,
wobei ein Profil von einem Mittelpunkt (TC) einer Oberfläche der Lauffläche (4) zu einem Punkt $P_{90}$, an welchem ein Abstand in der axialen Richtung von dem Mittelpunkt (TC) 90 % einer Hälfte einer Breite (W/2) des Reifens ist, durch eine Mehrzahl von Kreisbögen gebildet ist,
wobei jeder der Kreisbögen in Kontakt mit dem benachbart dazu liegenden Kreisbogen vorgesehen ist, und

ein Krümmungsradius von jedem der Kreisbögen kleiner ist als ein Krümmungsradius des Kreisbogens auf einer Innenseite in der axialen Richtung davon, und das Profil die folgenden Gleichungen (1) bis (4) erfüllt:

$$0,05 < Y_{60}/H \leq 0,10 \qquad (1)$$

$$0,10 < Y_{75}/H \leq 0,2 \qquad (2)$$

$$0,2 < Y_{90}/H \leq 0,4 \qquad (3)$$

$$0,4 < Y_{100}/H \leq 0,7 \qquad (4),$$

wobei in den Gleichungen (1) bis (4) H eine Höhe des Reifens darstellt, $Y_{60}$, $Y_{75}$, $Y_{90}$ und $Y_{100}$ jeweils Abstände in der radialen Richtung zwischen dem Mittelpunkt (TC) und den Punkten $P_{60}$, $P_{75}$, $P_{90}$ bzw. $P_{100}$ darstellen, wobei die Punkte $P_{60}$, $P_{75}$, $P_{90}$ und $P_{100}$ jeweils Punkte auf dem Profil angeben, in welchen die Abstände in der radialen Richtung von dem Mittelpunkt (TC) 60 %, 75 %, 90 % bzw. 100 % der Hälfte der Breite des Reifens betragen.

5. Notlaufreifen nach einem der Ansprüche 1 bis 4, wobei die Vertiefung (62) eine ringförmige Schrägfläche (66) und eine kreisförmig geformte Grundfläche (68), die an die Schrägfläche (66) angrenzt, aufweist, und ein Winkel ($\alpha$), der durch die Schrägfläche (66) mit Bezug auf die Grundfläche (68) gebildet ist, gleich oder größer als 10° ist und gleich oder kleiner als 70° ist.

6. Notlaufreifen nach einem der Ansprüche 1 bis 5, wobei ein Gesamtwert der Volumina aller Vertiefungen (62) gleich oder größer als 300 mm$^3$ ist und gleich oder kleiner als 5000000 mm$^3$ ist.

7. Notlaufreifen nach einem der Ansprüche 1 bis 6, wobei eine Gesamtzahl der Vertiefungen (62) gleich oder größer als 50 ist und gleich oder kleiner als 5000 ist.

8. Notlaufreifen nach einem der Ansprüche 1 bis 7, wobei der Wulst einen Kern (38) aufweist, und wobei ein Belegungsverhältnis Y der Vertiefung (62) gleich oder höher als 10 % ist und gleich oder niedriger als 85 % ist, wobei das Belegungsverhältnis Y der Vertiefung (62) in einem Bezugsbereich gemäß der folgenden Gleichung berechnet wird:

$$Y = (S1/S2) * 100;$$

wobei S1 das Gesamtflächenmaß der Vertiefungen (62) darstellt, die in einem Bezugsbereich enthalten sind, und S2 ein Oberflächenmaß des Bezugsbereichs unter der Annahme darstellt, dass die Vertiefung (62) nicht vorgesehen ist; der Bezugsbereich einen Bereich in der Seitenfläche angibt, in dem eine Höhe (H) von einer Grundlinie (BL) gleich oder größer als 20 % der Höhe (H) des Reifens (2) ist und gleich oder kleiner als 80 % davon ist; die Grundlinie (BL) durch einen am weitesten innen liegenden Punkt in der radialen Richtung des Kerns (38) verläuft und sich in der axialen Richtung erstreckt.

**Revendications**

1. Pneumatique pour roulage à plat (2) comprenant :

une bande de roulement (4) incluant un profil ayant une pluralité d'arcs circulaires avec des rayons de courbure différents les uns des autres ; une paire de parois latérales (8) s'étendant presque jusqu'à l'intérieur dans une direction radiale depuis une extrémité de la bande de roulement (4), respectivement ;

une paire de talons (12) positionnés sur la partie la plus intérieure dans la direction radiale par rapport aux parois latérales (8), respectivement ;

une carcasse (14) posée entre les deux talons (12) le long de la bande de roulement (4) et des parois latérales (8) ;

une couche de renforcement positionnée sur l'intérieur de la bande de roulement (4) et à l'extérieur de la carcasse (14) dans la direction radiale ; et

une couche de support (16) positionnée à l'intérieur dans une direction axiale par rapport à la paroi latérale (8), **caractérisé en ce que**

une surface latérale du pneumatique comporte un grand nombre de petites cuvettes, telles que les petites cuvettes (62) ont la forme d'un cône tronqué.

2. Pneumatique pour roulage à plat selon la revendication 1, dans lequel la petite cuvette (62) a un diamètre (Di) qui est égal ou supérieur à 6 mm et qui est égal ou inférieur à 18 mm.

3. Pneumatique pour roulage à plat selon la revendication 1 ou 2, dans lequel la petite cuvette (62) a une profondeur (De) qui est égale ou supérieure à 0,5 mm, et qui est égale ou inférieure à 3,0 mm.

4. Pneumatique pour roulage à plat selon l'une quelconque des revendications 1 à 3, dans lequel un profil depuis un point central (TC) d'une surface de la bande de roulement (4) jusqu'à un point $P_{90}$ auquel une distance dans la direction axiale depuis le point central (TC) est 90 % de la moitié d'une largeur (W/2) du pneumatique est formé par une pluralité d'arcs circulaires,

chacun des arcs circulaires est prévu en contact avec l'arc circulaire qui lui est adjacent, et

un rayon de courbure de chacun des arcs circulaires est plus petit qu'un rayon de courbure de l'arc circulaire sur un côté intérieur dans la direction axiale par rapport à celui-ci, et le profil satisfait les équations suivantes (1) à (4) :

$$0,05 < Y_{60}/H \leq 0,10 \qquad (1)$$

$$0,10 < Y_{75}/H \leq 0,2 \qquad (2)$$

$$0,2 < Y_{90}/H \leq 0,4 \qquad (3)$$

$$0,4 < Y_{100}/H \leq 0,7 \qquad (4),$$

dans lesquelles, dans les équations (1) à (4), H représente une hauteur du pneumatique, $Y_{60}$, $Y_{75}$, $Y_{90}$ et $Y_{100}$ représentent des distances dans la direction radiale entre le point central (TC) et les points $P_{60}$, $P_{75}$, $P_{90}$ et $P_{100}$ respectivement, dans lesquels les points $P_{60}$, $P_{75}$, $P_{90}$ et $P_{100}$ indiquent des points sur le profil auxquels les distances dans la direction axiale depuis le point central (TC) sont 60 %, 75 %, 90 % et 100 % de la moitié de la largeur du pneumatique, respectivement

5. Pneumatique pour roulage à plat selon l'une quelconque des revendications 1 à 4, dans lequel la petite cuvette (62) a une surface inclinée de forme annulaire (66) et une surface de fond de forme circulaire (68) alignée avec la surface inclinée (66), et un angle ($\alpha$) formé par la surface inclinée (66) par rapport à la surface de fond (68) est égal ou supérieur à 10° et est égal ou inférieur à 70°.

6. Pneumatique pour roulage à plat selon l'une quelconque des revendications 1 à 5, dans lequel une valeur totale des volumes de toutes les petites cuvettes (62) est égale ou supérieure à 300 mm$^3$ et est égale ou inférieure à 5000000 mm$^3$.

7. Pneumatique pour roulage à plat selon l'une quelconque des revendications 1 à 6, dans lequel un nombre total des petites cuvettes (62) est égal ou supérieur à 50 et est égal ou inférieur à 5000.

8. Pneumatique pour roulage à plat selon l'une quelconque des revendications 1 à 7, dans lequel le talon possède un noyau (38), et dans lequel un taux d'occupation (Y) des petites cuvettes (62) est égal ou supérieur à 10 % et est égal ou inférieur à 85 %, le taux d'occupation Y des petites cuvettes (62) dans une région de référence étant calculé en accord avec l'équation suivante :

$$Y = (S1/S2) * 100 \; ;$$

dans laquelle S1 représente la superficie totale des petites cuvettes (62) incluse dans une région de référence, et S2 représente une superficie de la région de référence en supposant que les petites cuvettes (62) ne sont pas prévues ;

la région de référence indique une région dans la surface latérale dans laquelle une hauteur (H) depuis une ligne de base (BL) est égale ou supérieure à 20 % de la hauteur H du pneumatique (2) et est égale ou inférieure à 80 % de celle-ci ;

la ligne de base (BL) passe par un point tout à fait à l'intérieur de la direction radiale du noyau (38) et s'étend dans la direction axiale.

Fig. 1

Fig. 2

Fig. 3

Fig. 4

Fig. 5

Fig. 6

Fig. 7

Fig. 8

Fig. 9

**EP 2 277 719 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008062716 A
- JP 4238703 A
- JP 2000016030 A
- JP 2008001249 A
- JP 8337101 A
- JP 2007050854 A
- WO 200732405 A